# EUROPÄISCHE PATENTSCHRIFT

(11) **EP 2 594 382 B1**
(45) Veröffentlichungstag und Bekanntmachung des Hinweises auf die Patenterteilung: **01.01.2014**
(21) Anmeldenummer: 11009207.9
(22) Anmeldetag: 21.11.2011
(51) Int. Cl.: B29C 39/10, B29C 39/18, B29C 39/16, E06B 1/34, E06B 3/30

(54) **Verfahren zum Herstellen eines beschichteten länglichen Profilelements**
Method for producing a coated oblong profile element
Procédé de fabrication d'un élément de profil longitudinal revêtu

(43) Veröffentlichungstag der Anmeldung: 22.05.2013
(73) Patentinhaber: Frank Schmidt Verpachtungsunternehmen, 27419 Sittensen (DE)
(72) Erfinder: Schmidt, Frank, 27419 Sittensen (DE)
(74) Vertreter: Philipp, Matthias

(56) Entgegenhaltungen:
- EP-A1- 0 063 922
- EP-A2- 0 884 112
- DE-A1- 1 629 523
- DE-A1- 2 909 425
- GB-A- 2 246 385

## Beschreibung

Die Erfindung bezieht sich auf ein Verfahren zum Herstellen eines beschichteten länglichen Profilelements, das entlang seiner Längsachse einen gleichbleibenden Querschnitt aufweist, bei dem ein Teil einer äußeren Oberfläche des Profilelements mit einem aushärtbaren Beschichtungsmaterial versehen wird.

Aus der DE 1 629 523 ist ein Verfahren zum Beschichten von Profilen bekannt, bei dem das Profil in eine dieses vollständig umschließende Form eingelegt wird, in die zunächst Beschichtungsmaterial eingebracht worden war, um eine vollständige Ummantelung des Profils zu erreichen.

Die Aufgabe der Erfindung besteht darin, ein gattungsgemäßes Verfahren zu schaffen, bei dem keine oder zumindest keine das Profilelement vollständig umschließende Form benötigt wird.

Diese Aufgabe wird dadurch gelöst, dass in das Profilelement, das im Ausgangszustand bspw. rechteckigen, quadratischen, abgerundeten oder runden Querschnitt aufweisen kann, eine entlang der Längsachse verlaufende Ausnehmung eingebracht wird, wobei an jeder Längsseite eine die Ausnehmung begrenzende seitliche Begrenzung verbleibt, und ein fließfähiges Beschichtungsmaterial in die Ausnehmung gefüllt und darin ausgehärtet wird, während sich das Profilelement horizontal mit nach oben weisender Ausnehmung befindet. Die Ausnehmung kann bspw. eingefräst werden, und sie ist zu beiden Längsseiten und ggf. auch zu den Stirnseiten hin durch Begrenzungen wannenartig geschlossen, um das fließfähige Beschichtungsmaterial aufzunehmen.

Zweckmäßigerweise erstreckt sich die Ausnehmung über die gesamte Länge des Profilelements, wobei sie insbesondere entlang der Längsachse des Profilelements einen gleichbleibenden Querschnitt aufweist. Es kann vorgesehen sein, dass die Ausnehmung in einem geringen Abstand vor stirnseitigen Enden des Profilelements endet und eine stirnseitige Begrenzung verbleibt.

Stirnseitige Enden der Vertiefung können mit einem Begrenzungselement abgeschlossen werden, und das Begrenzungselement kann nach dem Aushärten entfernt werden.

Bevorzugt ist vorgesehen, dass die Beschichtung nach dem Aushärten spanabhebend bearbeitet wird. Auch kann vorgesehen sein, dass die seitliche Begrenzung oder die seitlichen Begrenzungen, sofern vorhanden, nach dem Aushärten spanabhebend bearbeitet wird (werden), wobei die Begrenzung(en) ganz oder teilweise entfernt werden kann (können).

Weiterhin kann vorgesehen sein, dass das Profilelement nach dem Aushärten der Beschichtung spanabhebend bearbeitet wird. Das Profilelement kann bspw. zu einem Profilteil mit entlang seiner Längsachse gleichbleibendem Querschnitt verarbeitet werden, etwa zu einem Fenster- oder Türrahmen- oder -flügelprofil, aus dem wiederum ein Fensterrahmen, Fensterflügel, Türrahmen oder ähnliches gebildet wird.

In allen Fällen kann vorgesehen sein, dass ein aufschäumbares Beschichtungsmaterial verwendet wird, das nach dem Einbringen in die Vertiefung oder den Beschichtungsraum aufgeschäumt wird.

Weitere Vorteile und Merkmale der Erfindung ergeben sich anhand der nachfolgenden Beschreibung, wobei
- Fig. 1: eine Querschnittsansicht eines Profilelements im Ausgangszustand zeigt,
- Fig. 2a, b: zwei Querschnittsansichten des Profilelements nach Fig. 1 mit unterschiedlichen Ausnehmungen zeigen,
- Fig. 3a, b: das Profilelement nach Fig. 2 zeigen, wobei die Ausnehmungen mit einem Beschichtungsmaterial ausgegossen sind,
- Fig. 4a, b: die Profilelemente nach Fig. 3 in einem spanabhebend bearbeiteten Fertigzustand zeigen,
- Fig. 5: eine Querschnittsansicht eines aus den Profilelementen nach Fig. 4 gebildeten Fenstersystems zeigt,

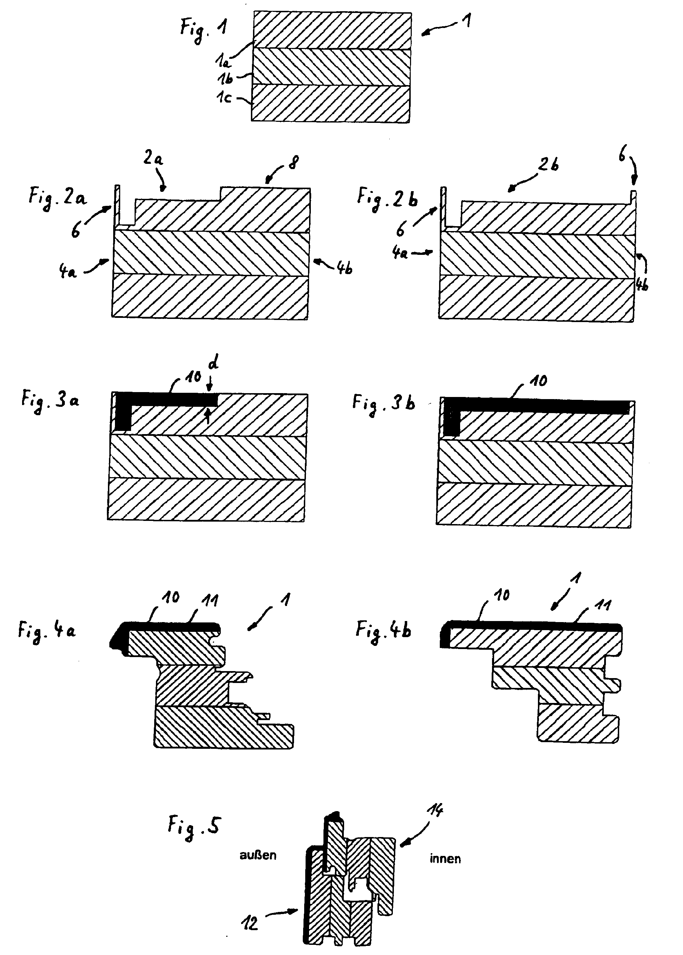

Fig. 1 zeigt beispielhaft eine Querschnittsansicht eines im Rahmen der Erfindung zu beschichtenden länglichen Profilelements 1, das auch als "Kantel" bezeichnet wird, wobei jegliche zweckmäßige Querschnittsform, beliebige Materialien und Materialkombinationen im Rahmen der Erfindung Verwendung finden können. Beispielsweise sind Schichtaufbauten aus unterschiedlichen Hölzern, etwa Vollhölzern, Spanplatten, Korkschichten, aber auch aus oder mit Kunststoffen, geschäumten Kunststoffen oder Metallen möglich. Die Erfindung bezieht sich auch auf Profilelemente mit nach außen offenen Kammern oder mit Hohlkammern. Mit der Bezeichnung "längliches Profilelement" ist gemeint, dass dieses entlang seiner Längsachse 3 (senkrecht zur Darstellungsebene von Fig. 1 bis 5) eine gleichbleibende Querschnittsform aufweist, wie etwa gemäß Fig. 1 eine rechteckige Querschnittsform mit drei miteinander verbundenen Materialschichten 1a, 1b, 1c, beispielsweise drei Holzschichten, von denen mindestens zwei unterschiedlich sein können.

Fig. 2a, 2b zeigen Querschnittsformen von zwei unterschiedlich bearbeiteten Profilelementen, die im Ausgangszustand Fig. 1 entsprechen, mit jeweils einer im Querschnitt L-förmigen Ausnehmung 2a, b in Form einer Ausfräsung. In beiden Fällen ist die Ausfräsung so angeordnet, dass an beiden Längsseiten 4a, 4b jeweils eine seitliche Begrenzung verbleibt. Auf der einen Längsseite 4a bleibt jeweils ein seitlicher Steg 6 als seitliche Begrenzung stehen. Auf der anderen Längsseite 4b bleibt bei der Ausführung nach Fig. 2a ein relativ breiter bzw. dicker Materialbereich 8 als seitliche Begrenzung stehen, während bei der Ausführung gemäß Fig. 2b ein relativ schmaler seitlicher Steg 6 verbleibt.

Fig. 3a, 3b zeigen einen Zustand, in dem die Ausnehmungen oder Ausfräsungen 2a, b mit einem fließfähigen Beschichtungsmaterial 10 ausgegossen sind. Bei dem Beschichtungsmaterial kann es sich um eine Gießmasse handeln, die aus einem PUR-, Epoxid- oder Polyester-Harzsystem besteht und entsprechend der Ausdehnung des Holzes, der Haftung zum Holz, der gewünschten Härte, Farbe, Lackierbarkeit oder sonstigen gewünschten technischen Eigenschaften eingestellt ist. Das Beschichtungsmaterial 10 sollte eine Dicke d von mindestens 1 mm oder 2 mm haben und kann 20 mm oder mehr dick sein. Die Höhe der seitlichen Begrenzung in Form des Stegs 6 oder des seitlichen Materialbereichs 8 gibt eine maximale Dicke der Beschichtung vor. Bevorzugt werden die Ausnehmungen oder Ausfräsungen 2a, b mit dem Beschichtungsmaterial 10 bündig vergossen, d. h. bis zur Höhe der seitlichen Begrenzungen oder Stege.

Vor dem Einbringen des Beschichtungsmaterials 10 ist es zweckmäßig, die mit dem Beschichtungsmaterial in Kontakt kommende Oberfläche des Profilelements zu trocknen, insbesondere auf eine Feuchte von höchstens 12 %, 10 %, 8 %, 6 % oder weniger, beispielsweise mittels eines Heißluftgebläses, mit Wärmestrahlern oder ähnlichen Mitteln, um eine optimale Verbindung zwischen dem Beschichtungsmaterial und der Oberfläche des Profilelements zu erreichen.

Das Beschichtungsmaterial 10 kann im ausgehärteten Zustand unter Bildung einer festen Beschichtung 11 (Fig. 4a, b) eine Shore D-Härte zwischen 65 und 85 besitzen. Das Beschichtungsmaterial kann in einer gewünschten Farbe eingefärbt sein, um eine spätere Lackierung einzusparen.

Vor dem Einbringen des Beschichtungsmaterials werden stirnseitige Enden des Profilelements, d. h oberhalb und unterhalb der Darstellungsebene der Fig. 1 bis 5 liegende Enden, jeweils mit einem Begrenzungselement abgeschlossen, sofern nicht die eingebrachte Ausnehmung in einem Abstand vor dem jeweiligen stirnseitigen Ende des Profilelements endet.

Fig. 4a und 4b erläutern eine mögliche spanabhebende Formgebung eines Profilelements 1 nach Fig. 1 nach dem Aushärten des Beschichtungsmaterials 10, wobei ersichtlich die seitlichen Begrenzungen 6, 8 spanabhebend entfernt worden sind, so dass die Beschichtung 11 zu mehreren Seiten des Profilelements hin freisteht.

Die Ausführungsformen nach Fig. 2 bis 4, insbesondere die spanabhebenden Formgebungen nach Fig. 4, erläutern die Herstellung eines Fenstersystems nach Fig. 5, mit einem außen liegenden Fensterrahmen mit Rahmenprofil 12 und mit einem innenliegenden Fensterflügel mit Flügelprofil 14. Die der Witterung ausgesetzten Flächen (links in Fig. 5) beider Profile sind aufgrund der Beschichtung mit dem Beschichtungsmaterial 10 witterungsbeständig, ohne dass in herkömmlicher Weise auf die Anbringung von Metallprofilen, beispielsweise

Aluminiumprofilen, zurückgegriffen werden müsste.

Eine thermische Isolierung wird durch die erfindungsgemäße Anordnung eines Beschichtungsmaterials ebenfalls erzielt, wobei diese Wirkung durch ausgewählte Materialien und/oder durch Verwendung eines aufschäumenden Beschichtungsmaterials noch verbessert werden kann.

Die Abläufe gemäß Fig. 2 bis 4 können mehrmals nacheinander zur Ausbildung mehrerer Beschichtungen an mehreren oder allen Seiten eines Profilelements ausgeführt werden.

### BEZUGSZEICHENLISTE

- 1: Profilelement
- 1 a, b, c: Materialschicht
- 2a, b: Ausnehmung (Ausfräsung)
- 3: Längsachse
- 4a, b: Längsseite
- 6: Steg
- 8: Materialbereich
- 10: Beschichtungsmaterial
- 11: Beschichtung
- 12: Rahmenprofil
- 14: Flügelprofil

- d: Dicke (von 10, 11)

## Patentansprüche

1. Verfahren zum Herstellen eines beschichteten länglichen Profilelements (1), das entlang seiner Längsachse (3) einen gleichbleibenden Querschnitt aufweist, bei dem ein Teil einer äußeren Oberfläche des Profilelements (1) mit einem aushärtbaren Beschichtungsmaterial (10) versehen wird, **dadurch gekennzeichnet, dass** in das Profilelement (1) eine entlang der Längsachse (3) verlaufende Ausnehmung (2a, b) eingebracht wird, wobei an jeder Längsseite (4a, b) eine die Ausnehmung (2a, b) begrenzende seitliche Begrenzung (6, 8) verbleibt, und ein fließfähiges Beschichtungsmaterial (10) in die Ausnehmung (2a, b) gefüllt und darin zu einer Beschichtung (11) ausgehärtet wird, während sich das Profilelement (1) horizontal mit nach oben weisender Ausnehmung (2a, b) befindet.

2. Verfahren nach Anspruch 1, **dadurch gekennzeichnet, dass** die seitliche(n) Begrenzung(en) (6, 8) nach den Aushärten spanabhebend bearbeitet wird (werden).

3. Verfahren nach Anspruch 1 oder 2, **dadurch gekennzeichnet, dass** die seitliche(n) Begrenzung(en) (6, 8) nach den Aushärten entfernt wird (werden).

4. Verfahren nach einem der Ansprüche 1 bis 3, **dadurch gekennzeichnet, dass** stirnseitigen Enden der Ausnehmung (2a, b) mit einem Begrenzungselement abgeschlossen werden und das Begrenzungselement nach dem Aushärten des Beschichtungsmaterials (10) entfernt wird.

5. Verfahren nach einem der vorangehenden Ansprüche, **dadurch gekennzeichnet, dass** die Beschichtung (11) nach dem Aushärten spanabhebend bearbeitet wird.

6. Verfahren nach einem der vorangehenden Ansprüche, **dadurch gekennzeichnet, dass** das Profilelement nach dem Aushärten der Beschichtung (11) spanabhebend bearbeitet wird.

## Claims

1. Method for producing a coated oblong profile element (1), which along its longitudinal axis (3) has a constant cross-section, whereby a portion of an outer surface of the profile element (1) is provided with a hardening coating material (10), **characterized in that** a recess (2a, b) extending along the longitudinal axis (3) is placed in the profile element (1), wherein a lateral boundary (6, 8) limiting the recess (2a, b) exists on each longitudinal side (4a, b) where a flowing coating material (10) is filled in the recess (2a, b) and is hardened to a coating (11), while the profile element (1) is placed horizontally with recess (2a, b) facing upwards.

2. Method according to claim 1, **characterized in that** the lateral boundary(ies) (6, 8) is (are) machined after hardening.

3. Method according to claim 1 or 2, **characterized in that** the lateral boundary(ies) (6, 8) is (are) separated after hardening.

4. Method according to any one of claims 1 to 3, **characterized in that** front-sided ends of the recess (2a, b) are closed with a boundary element and the boundary element is separated after hardening of the coating material (10).

5. Method according to any one of the above claims, **characterized in that** the coating (11) is machined after hardening.

6. Method according to any one of the above claims, **characterized in that** the profile element is machined after hardening of the coating (11).

## Revendications

1. Procédé de fabrication d'un élément de profil oblong revêtu (1), qui, le long de son axe longitudinal (3), a une section constante, ce par quoi une partie d'une surface extérieure de l'élément de profil (1) comporte un matériau de revêtement de durcissement (10), **caractérisé en ce qu'**un évidement (2a, b) s'étendant le long de l'axe longitudinal (3) est placé dans l'élément de profil (1), dans lequel une limite latérale (6, 8) limitant l'évidement (2a, b) existe sur chaque côté longitudinal (4a, b) où un matériau de revêtement fluide (10) est versé dans l'évidement (2a, b) et est durci jusqu'à devenir un revêtement (11), alors que l'élément de profil (1) est placé à l'horizontale, l'évidement (2a, b) étant orienté vers le haut.

2. Procédé selon la revendication 1, **caractérisé en ce que** la (les) limite(s) latérale(s) (6, 8) est (sont) usinée(s) après le durcissement.

3. Procédé selon la revendication 1 ou la revendication 2, **caractérisé en ce que** la (les) limite(s) latérale(s) (6, 8) est (sont) séparée(s) après le durcissement.

4. Procédé selon l'une quelconque des revendications 1 à 3, **caractérisé en ce que** les extrémités côté avant de l'évidement (2a, b) sont fermées par un élément de limite et l'élément de limite est séparé après le durcissement du matériau de revêtement (10).

5. Procédé selon l'une quelconque des revendications précédentes, **caractérisé en ce que** le revêtement (11) est usiné après le durcissement.

6. Procédé selon l'une quelconque des revendications précédentes, **caractérisé en ce que** l'élément de profil est usiné après le durcissement du revêtement (11).
